# EUROPEAN PATENT APPLICATION

(11) **EP 4 765 722 A1**
(43) Date of publication of application: **24.06.2026**
(21) Application number: 24222619.9
(22) Date of filing: 20.12.2024
(51) Int. Cl.: H04L 9/08

(54) **PULSE-TIMING ATTACK RESISTANT QKD RECEIVER AND QKD SYSTEM COMPRISING THE SAME**

(71) Applicant: ID Quantique S.A., 1227 Genève (CH)
(72) Inventor: HUTTNER, Bruno, 1022 Chavannes-près-Renens (CH); BOARON, Alberto, 1205 Genève (CH)
(74) Representative: KATZAROV S.A.

(57) **Abstract**

The present invention relates to a quantum key distribution receiver comprising a unique single detector adapted to detect qubits composed of low power optical pulses in specified time-bins, A being the Advanced time-bin and D being the Delayed time-bin, an interferometer with two unequal arms, one short arm (S) and one long arm (L) adapted to create an interference between the two successive time-bins A and D so as to create three time bins AS, AL&DS, DL, characterized in that said receiver is adapted to control the single detector so as to work in a gated mode, where he chooses when the detector is active and when it is not and to choose in which basis he will measure, such that for each qubit received and interfered by said interferometer, said receiver is adapted to activate its single detector for the DL and AS bins to measure in the Z basis, or to activate it for the AL&DS bin to measure in the X basis.

## Description

### Technical Field

The present invention relates to Quantum Key Distribution (QKD) technology and more particularly to a receiver presenting a simplified structure and a QKD system comprising said receiver.

### Background of the invention

Quantum cryptography or Quantum Key Distribution (QKD), in the following also referred to as QKD, is a method allowing the distribution of a secret key between two distant parties, the emitter and the receiver, with a provable security. Quantum key distribution relies on quantum physics principles and encoding information in quantum states, or qubits, as opposed to classical communication's use of bits. Usually, photons are used for these quantum states. Quantum key distribution exploits certain properties of these quantum states to ensure its security.

More particularly, the security of this method comes from the fact that the measurement of a quantum state of an unknown quantum system modifies the system itself. In other words, a spy eavesdropping on a quantum communication channel cannot get information on the key without introducing errors in the key exchanged between the emitter and the receiver thereby informing the users of an eavesdropping attem pt.

The encryption devices enable secure transmission of useful payload by performing some kind of symmetric encryption using the keys exchanged by quantum key distribution. Specific quantum key distribution systems are described for instance in US 5,307,410, and in the article by Gisin et al. entitled "Quantum cryptography" Rev. Mod. Phys. 74, 145 - Published 8 March 2002.

Nowadays, most Discrete-Variable QKD system mentioned in the literature, which rely on single-photon detection, have several detectors, in addition to several other optical components. This is due to the fact that the receiver, Bob, measures the value of the qubit sent by the transmitter, Alice, by detecting it as a click in one out of two detectors. In addition, he has to choose a measurement basis, either actively with an optical switch and one set of detectors, or passively with an optical coupler and an extra set of detectors.

This leads to QKD receivers with additional modules which complexifies the receiver structure and its manufacture. Moreover, these modules are more and more expensive which adds cost and complexity to the entire QKD systems.

Therefore, there is a need to reduce the number of active optical components in QKD receivers without impacting the security of the system.

However, with the current techniques, it is not possible to reduce the number of optical elements and provide a simplified receiver without exposing the system to eavesdropper attacks, hence reducing the security of the QKD system.

It should be noted that some published articles already suggest using a unique single-photon detector, as for example the QKD system described in "Experimental demonstration of polarization-based decoy-state BB84 quantum key distribution utilizing a single laser and single detector", a preprint available on OpticaOpen, uses a unique single-photon detector. However, all of these implementations are subject to the type of attacks, which will be presented in the following and make these implementations insecure. Security is only recovered by using the ideas in the present invention.

In this regard, a primary object of the invention is to solve the above-mentioned problems and more particularly to provide a system using a simple structured QKD receiver easy to manufacture and to implement without reducing the security of the QKD system.

### Summary of the invention

The present invention executes the general approach that in order to extend QKD applications to end-users, a simple and inexpensive QKD is needed.

The most expensive optical components in a QKD receiver are the single-photon detectors and the active optical components, which enable Bob to select the measurement basis. The present invention therefore solves the above-mentioned problems by providing a QKD receiver with a unique single-photon detector and no active optical component, thus providing a simple low-cost solution for the QKD receiver.

The general idea of the invention is to use a unique single-photon detector in so-called gated mode, which allows selecting electronically the time when the detector is active and when it is not active. In this way, the system is not exposed to attacks and its quantum security is maintained.

More particularly, a first aspect of the invention is a quantum key distribution receiver comprising a single detector adapted to detect a qubit composed of: a single advanced pulse (A), or a single delayed pulse (D), both comprising the Z-basis, or a pair of pulses (A, D) comprising the X-basis; an unbalanced interferometer with two arms, the short arm (S) and the long arm (L), adapted to create an interference between the two pulses of said pair of pulses so as to create three time bins AS, AL+DS, DL; characterized in that said receiver is adapted to control the single detector so as to work in a gated mode, where he chooses when the detector is active and when it is not and to choose in which basis he will measure such that for each qubit received and interfered by said interferometer, said receiver is adapted to activate its single detector for the DL and AS bins to measure in the Z basis, or to activate it for the AL&DS bin to measure in the X basis.

Preferably, when the X basis is chosen, the detector adds an early time bin spaced from AS by the same spacing between the two pulses of the X-basis state and of the interferometer delay, and a late time bin spaced from DL by the same spacing between the two pulses of the X-basis state and of the interferometer delay. Both time-bins are denoted as test time-bins. They are used to detect pulse-timing attacks, as discussed in the following.

Advantageously, the interferometer is a Mach Zehnder or a Michelson interferometer with one long arm (L) and one short arm (S), where the difference in length between the arms corresponds to the inter-pulse distance.

According to a preferred embodiment of the present invention, said interference between the two pulses is a destructive interference.

Preferably, it is used in a three-state BB84 QKD protocol.

A second aspect of the invention is a quantum key distribution system comprising a quantum key distribution receiver of the first aspect of the invention and an emitter connected through a quantum channel.

Advantageously, the emitter sends pairs of pulses of the monitoring qubits such that two pairs of pulses show a separation at least equal to the pair length.

A third aspect of the invention is a quantum key distribution method implemented in the quantum key distribution system of the second aspect of the invention comprising a step of judgment wherein when the receiver measures in the X basis and a there is a detection in one of the test time-bins, a pulse-timing attack is detected.

The particular advantages of this device of the invention being similar to the ones of the method of the first aspect of the invention, they will not be repeated here.

### Brief description of the drawings

Further particular advantages and features of the invention will become more apparent from the following non-limitative description of at least one embodiment of the invention which will refer to the accompanying drawings, wherein the same reference numerals indicate the same feature. In particular,
- Figure 1 shows the states prepared by Alice for a three-state BB84 protocol;
- Figure 2 shows the sequences of pulses possibly sent by Alice;
- Figure 3 shows the setup at the receiver with a single detector;
- Figure 4 shows a successful pulse-timing attack of an eavesdropper on a single detector receiver for the setup of Figure 3;
- Figure 5 schematically represents the gated mode of the detector of the receiver of the present invention, and
- Figure 6 illustrates how a single detector receiver of the present invention can detect a pulse-timing attack of an eavesdropper.

### Detailed Description

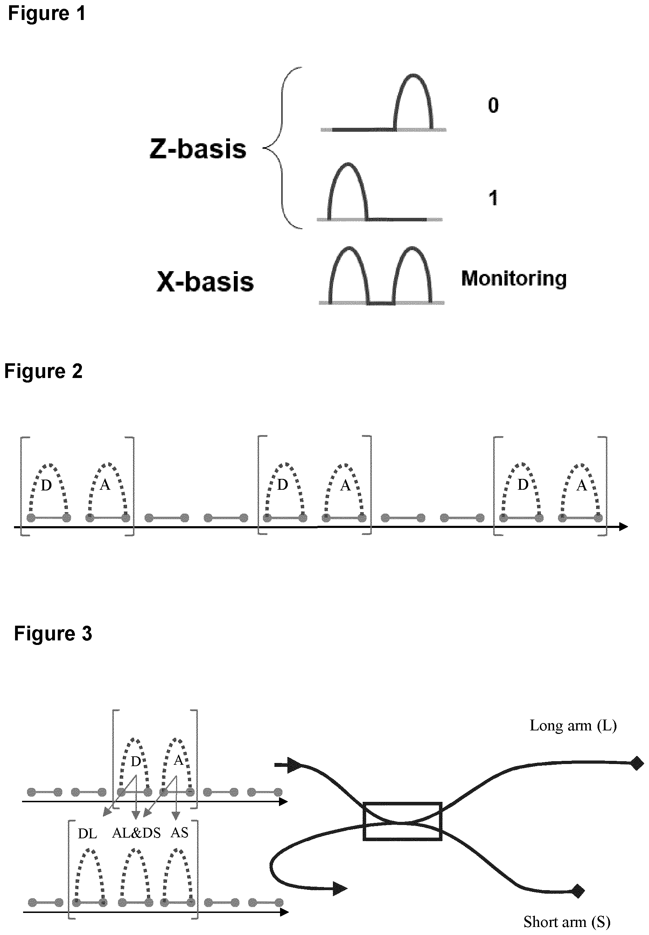

The invention will be described, for better understanding, with reference to a specific embodiment illustrated by Figures 1 to 6. It will however be understood that the invention is not limited to the embodiments herein described but is rather defined by the claims and encompasses all embodiments which are within the scope of the claims.

The present invention relates to a quantum key distribution receiver presenting a simplified structure and a QKD system comprising said receiver adapted to run a three-state BB84 QKD protocol which can be easily implemented.

More particularly, as mentioned above, the present invention provides a way to implement a receiver side of this three-state BB84 protocol with a unique single-photon detector and a fixed interferometer. Also, thanks to the invention the receiver is entirely passive and no high-speed optical component is needed. The receiver of the present invention therefore helps in terms of cost, complexity and reliability.

It has to be noted that the present invention does not discuss the transmitter side, which can be implemented in various ways, however for sake of clarity, its functioning is reminded here.

In the time-bin and phase implementation of the three-state BB84 protocol, the transmitter, Alice, generates three possible qubits: two data qubits and one monitoring qubit. The qubits are composed of two time-bins, denoted as advanced (A) and delayed (D). The data-qubits in the so-called Z-basis have a value of 0 or 1 and are composed by an A or D pulse, respectively. The monitoring qubit, corresponding to the X-basis, consists of a superposition of A and D pulses with a fixed phase relationship between them. At Bob, the receiver is setup in such a way that the two pulses in the pair will interfere destructively, which means that they should not generate any count. A count at the receiver, when Alice sent a monitoring qubit means a possible eavesdropper attack. As it can be deduced by their name, the data qubits are used to generate a key, which will be used to encrypt messages, while the monitoring qubits are used to test for any eavesdropping attempt. These pulses are schematically shown in Figure 1.

This being known, in order to establish communication, the emitter Alice encodes these states in a random order and sends them to the receiver, Bob. In the present preferred embodiment, illustrated in Figure 2, in order to allow the use of a single detector, the pairs of pulses of the monitoring qubits sent by Alice are separated by the pair length. Preferably, two pairs of pulses show a separation at least equal to the pair length. It has to be noted that a separation equal to the pair length is the minimum. It could be much more. A longer separation would be easier to implement, but would also lower the key rate (fewer pulses per second).

This will be explained in the following.

According to a preferred embodiment, the pulses sent by Alice must have a minimum separation equal to the length of the pair of pulses to permit the use of a single detector. In Figure 2, the successive horizontal lines correspond to the time-bins and the dotted lines represent the optical pulses, with one advanced pulse (A) when the first pulse only is populated, one delayed pulse (D) when the second pulse only is populated, both corresponding to the Z-basis, and the pair of pulses (A&D) when both pulses are populated, corresponding to the X-basis, as shown in Figure 2. The brackets denote the envelope of the time slots of the pulses (i.e. the pulses sent by Alice are always contained within this envelope).

Now that the preferred emitting side of the system as described in Figure 2, is known, the following will describe the detection side comprising the setup and the method run at Bob in reference to Figure 3. **Error! Reference source not found.**

More particularly, Figure 3 schematically shows the setup at the receiver, Bob, with an interferometer, preferably a Mach Zehnder or a Michelson interferometer with one long arm (L) and one short arm (S), where the difference in length between the arms corresponds to the inter-pulse distance. This ensures that the two pulses in the pair of pulses of the X-basis can interfere destructively.

We now analyse the setup. Alice chooses randomly, which pulse to send. After the detection, she informs Bob about the choice of basis. Bob will only keep the pulses sent in the Z-basis (0 or 1) to generate the key. He will use the detections in the X-basis to check for an eavesdropper. When Alice sent an optical pulse A (corresponding to 0), the pulse is split in the interferometer into two components AS, AL. If the detector clicks at the time corresponding to AS, Bob registers a 0. If the detector clicks at the time corresponding to AL, Bob rejects the count. Similarly, when Alice sent an optical pulse D (corresponding to 1), the pulse is split into two components DS, DL. If the detector clicks at the time corresponding to DL, Bob registers a 1. If the detector clicks at the time corresponding to DS, Bob rejects the count. When Alice sent a pair of monitoring pulses in the X-basis, all three time slots could register a click. If the detector clicks at a time corresponding to AS or DL, Bob rejects the count. However, due to the destructive interference at the detector for the DS&AL slot, there should be no count in this time bin. Therefore a count in this slot will be interpreted as an attack by the eavesdropper, denoted as Eve. This is summarized in Table 1.

**Table 1: The possible outcomes at Bob, when Alice sends pulses either in the Z-basis or in the X-basis. Each of the six possible outcomes refer to a click in the corresponding time bin.**

| | | | |
|---|---|---|---|
| Time bin | AS | DS&AL | DL |
| Data Z-basis | **0** | **Reject** | **1** |
| Monitor X-basis | **Reject** | **Eve** | **Reject** |

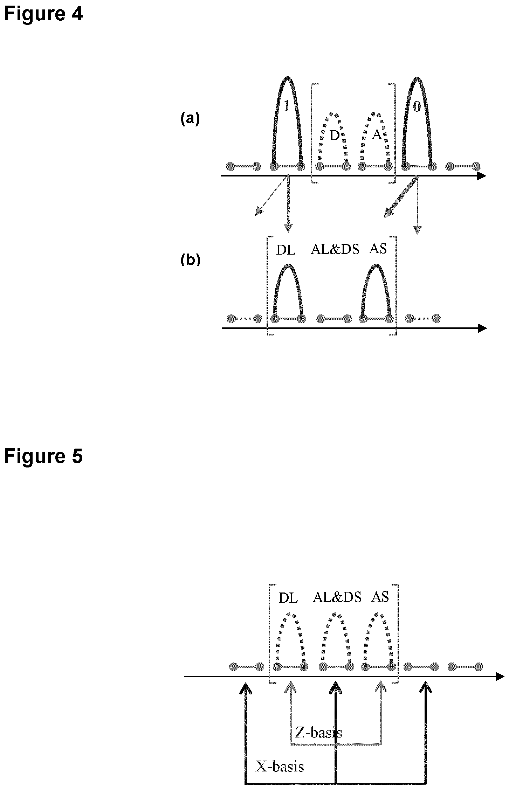

While this configuration shows positive outcome, it is not secure, since the eavesdropper is able send a pulse at the time she chooses. This attack is known as the pulse-timing attack and is described in Figure 4. Eve can send fake pulses one time-bin before A or one time-bin after D, which will be detected as 0 (AS) or 1 (DL), but never in the AL&DS time bin. This means that no count would ever be registered in the AL&DS time bin, which prevents the detection of Eve.

This situation can be prevented by Bob adopting a set of two countermeasures: the first one comprises enabling an active choice of basis, by using the detector in a so-called gated mode and the second one consists in expanding the detection times to include 5 time-bins instead of three in order to prevent pulse-timing attacks, as described in Figure 5.

In this gated mode, the detector can only click at the time when there is a voltage gate on the detector. In essence, Bob can then choose when the detector is active and when it is not. This allows Bob to choose in which basis he will measure, as described below.

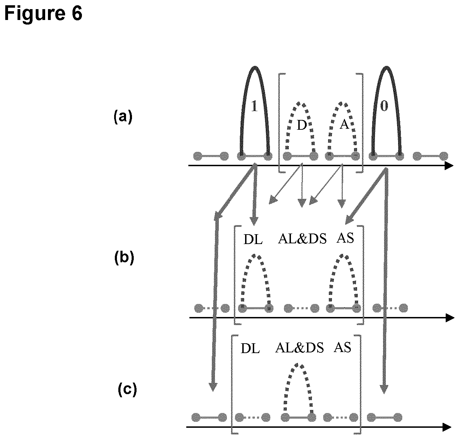

The gated mode with extra time bins is illustrated in Figure 5. This gated mode of the detector allows Bob to choose the basis he wishes to measure. According to this particular embodiment, Bob can drive and open the detector in the DL and AS bins to measure in the Z basis, and he can drive and open the detector for the AL&DS bin to measure in the X basis. In addition, when the X basis is chosen, he adds an early, just before AS, time bin, where the spacing between early and AS is the same as the spacing between the two pulses of the X-basis state and of the interferometer delay, and a late, just after DL, time bin, where the spacing between late and DL is the same as the spacing between the two pulses of the X-basis state and of the interferometer delay. Both time-bins are denoted as test time-bins. They are used to prevent pulse-timing attacks as explained in the example below in reference to Figure 6. Detections in the test time-bins, indicate the presence of an eavesdropper.

### Example

Figure 6 shows what happens with a single detector receiver of the present invention and how it can detect an attack of Eve.

In step (a) is exemplified a pulse-timing attack, where we can see that Eve sends fake pulses, which mimics either 0 or 1, i.e. a fake 0, respectively a fake 1 like in the example of Figure 4.

Upon reception, in step (b), Bob measures the received signal in the Z-basis where he sees no error, since the detector is only active in DL and AS time bins (full lines).

However, when Bob measures in the X-basis, in step (c), a fake 0 will be detected in the first time bin, before AS, and a fake 1 will be detected in the last time bin, after DL. Detection in either of these bins tells Bob that Eve has attempted a pulse-timing attack.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses which can be used.

## Claims

1. Quantum key distribution receiver comprising
a unique single detector adapted to detect qubits composed of low power optical pulses in specified time-bins, said qubits being at least one of a single advanced pulse (A), or a single delayed pulse (D), both comprising the Z-basis, or a pair of pulses (A, D) comprising the X-basis, and
an interferometer with two unequal arms, one short arm (S) and one long arm (L) adapted to create an interference between the two successive time-bins A and D so as to create three time bins AS, AL&DS, DL,
**characterized in that** said receiver is adapted to control the single detector so as to work in a gated mode, where he chooses when the detector is active and when it is not and to choose in which basis he will measure such that for each qubit received and interfered by said interferometer, said receiver is adapted to activate its single detector for the DL and AS bins to measure in the Z basis, or to activate it for the AL&DS bin to measure in the X basis.

2. Quantum key distribution receiver according to claim 1, **characterized in that** when the X basis is chosen, said receiver adds one early gate corresponding to an early time bin spaced from AS by the same spacing between the two pulses of the X-basis state and of the interferometer delay, and one late gate corresponding to a late time-bin spaced from DL by the same spacing between the two pulses of the X-basis state and of the interferometer delay, these time-bins being denoted as test time-bins.

3. Quantum key distribution receiver according to any one of claims 1 to 2, **characterized in that** the interferometer is a Mach Zehnder or a Michelson interferometer with one long arm (L) and one short arm (S), where the difference in length between the arms corresponds to the inter-pulse distance.

4. Quantum key distribution receiver according to any one of claims 1 to 3, **characterized in that** said interference between the two pulses is a destructive interference.

5. Quantum key distribution receiver according to any one of claims 1 to 4, **characterized in that** it is adapted to be used in a three-state BB84 QKD protocol.

6. Quantum key distribution system comprising a quantum key distribution receiver of any one of claims 1-5 and an emitter connected through a quantum channel.

7. Quantum key distribution system according to claim 6, **characterized in that** the emitter sends pairs of pulses of the monitoring qubits such that two pairs of pulses show a separation at least equal to the pair length.

8. Quantum key distribution method complemented in the quantum key distribution system of claims 1-7 comprising a step of judgment wherein when the receiver measures in the X basis and there is a detection in one of the test time-bins, a pulse-timing attack is detected.
